Europäisches Patentamt

European Patent Office

Office européen des brevets

(11) Veröffentlichungsnummer: **0 198 405**
**B1**

(12) **EUROPÄISCHE PATENTSCHRIFT**

(45) Veröffentlichungstag der Patentschrift: **20.06.90**

(51) Int. Cl.⁵: **A 01 B 15/14,** A 01 B 3/421

(21) Anmeldenummer: **86104831.2**

(22) Anmeldetag: **09.04.86**

(54) Anbaupflug.

(30) Priorität: **12.04.85 DE 3513096**

(43) Veröffentlichungstag der Anmeldung:
**22.10.86 Patentblatt 86/43**

(45) Bekanntmachung des Hinweises auf die
Patenterteilung:
**20.06.90 Patentblatt 90/25**

(84) Benannte Vertragsstaaten:
**DE FR GB**

(56) Entgegenhaltungen:
DE-A-2 436 853
DE-A-3 201 736
DE-B-1 021 614
DE-B-1 070 432
DE-C- 823 816
FR-A-1 594 728

(73) Patentinhaber: **Maschinenfabriken Bernard
Krone GmbH
Heinrich-Krone-Strasse 10
D-4441 Spelle (DE)**

(72) Erfinder: **Krone, Bernard
Bernard-Krone-Str. 11
D-4441 Spelle (DE)**
Erfinder: **Temmen, Hugo
Am Wöhle Hof. 11
D-4441 Spelle (DE)**

(74) Vertreter: **Busse & Busse Patentanwälte
Postfach 1226 Grosshandelsring 6
D-4500 Osnabrück (DE)**

Courier Press, Leamington Spa, England.

## Beschreibung

Die Erfindung bezieht sich auf einen Anbaupflug in einer Ausbildung gemäß dem Oberbegriff des Patentanspruchs 1.

Anbaupflüge werden üblicherweise derart ausgebildet, daß mit einer Verstelleinrichtung Pflugkoppel und Pflugrahmen derart zueinander einstellbar sind, daß sich beim Pflügen die Unterlenker des Schleppers mit aufgenommener Pflugkoppel symmetrisch zur Schlepperachse einstellen und in Arbeitsrichtung verlängerte Mittellinien der Unterlenker einen ideellen Zugpunkt festlegen, der auf der Schleppermittelachse liegt, die wiederum im Idealzustand mit der Mittelachse der Pflugkoppel zusammenfällt. Die Wirkungsrichtung der resultierenden Kräfte zwischen Schlepper und Anbaupflug ist dann durch eine Verbindungslinie durch den zentralen Angriffspunkt der Gesamtwiderstandskraft aller Pflugkörper und dem ideellen Zugpunkt definiert. Ein Schrägzug des Pfluges auf den Schlepper ist jedoch hierdurch nicht zu vermeiden.

Aus der DE—C—823 816 ist ein Anbaupflug der eingangs genannten Art bekannt, der ein Scharnierteil, ein senkrecht zum Boden der Arbeitsstellung ausgerichteten Zapfen umfassendes Zwischenstück sowie eine Verschiebeeinrichtung aufweist. Der Pflugrahmen überträgt dabei die gesamte Widerstandskraft aller Pflugkörper über den Zapfen des Scharnierteils auf die Pflugkoppel. Die nach vorn verlängerte Verbindungslinie vom gedachten Angriffspunkt der Gesamtwiderstandskraft aller Pflugkörper am Pflugrahmen ist zur Mittelhochachse des Zapfens an dem von den Unterlenkern des Gestänges des Schleppers definierbaren Zugpunkt auf der Seite des Gepflügten in einem bestimmten Abstand verlegbar. Der Anbaupflug ist jedoch im Betrieb nicht gegen Seitenbewegungen arretiert, so daß bei einer Breitenverstellung der Zugpunkt durch aufwendige Justierarbeiten manuell festzulegen ist. Da die Verstelleinrichtung in Pflugrichtung dem Zapfen bzw. der Mittelhochachse nachgeordnet ist, verändert sich die Lage des Zapfens des Scharnierteils bei jeder Änderung der Schnittbreite durch die Verstelleinrichtung, so daß eine optimale Einstellung des idealen Zugpunktes bei vorzusehenden Einstellarbeiten in aller Regel nur in unzulänglicher Weise und meist auch nur zufällig möglich ist.

Aus der DE—B—22 40 335 ist eine Verstelleinrichtung für einen Drehpflug offenbart, bei der die Pflugkoppel mit einem Drehlager versehen ist, welches aus einem an der Pflugkoppel angebrachten zapfen- oder nabenförmigen Lagerteil und einem korrespondierenden, am Pflugrahmen angebrachten naben- oder zapfenförmigen Lagerteil besteht. Die Verbindung des naben- oder zapfenförmigen Lagerteils mit dem Pflugrahmen erfolgt über ein Zwischenstück, das eine Verschiebeeinrichtung aus einer hochkant gestellten und senkrecht zur Pflugrichtung liegenden Platte aufweist, deren Ränder in einer Kulisse geführt und gehalten sind, und mit der die Arbeitsbreite des ersten Pflugschars einstellbar ist. Desweiteren ist eine Einstellung und Arretierung der Winkellage zu einem in Arbeitsstellung des Pfluges senkrecht zum Erdboden ausgerichteten Zapfens zur Einstellung des idealen Zugpunktes vorgesehen. Letztere Einstellung erfolgt über eine eine Mutter durchsetzende Spindel mit einem manuell zu betätigenden Drehgriff. Diese hat den Nachteil, daß eine optimale ideelle Zugpunkteinstellung nur durch wiederholtes Probieren auf dem Acker und Nachstellung von Hand erreichbar ist. Eine Aufgabe, die von ungeübten Bedienpersonen meistens nicht zu bewältigen ist.

Aus der DE—A—28 45 111 ist ein Getriebe zur Verstellung der Breite und des idealen Schlepperzugpunktes eines Anbaupfluges bekannt. Hier erfolgt die Einstellung zwischen Pflugkoppel und Pflugrahmen mittels zweier Lenker, die ein Gelenkviereck bilden, dessen Winkel mittels eines längenveränderlichen Diagonallenkers in dem Gelenkviereck verstellbar sind. Auch hier wird eine ideelle Zugpunkteinstellung durch eine manuelle Verstellung eines Diagonallenkers angestrebt.

Eine Breitenverstellung des vorderen Pflugkörpers erfolgt durch eine Längenveränderung eines der beiden Lenker des Gelenkvierecks. Der Nachteil dieser Einstellung liegt ebenfalls in der Bedienung. Auch hier muß durch mehrmaliges Probieren die richtige Zugpunkteinstellung ermittelt werden, was nicht unerhebliche Vorkenntnisse der Bedienperson voraussetzt.

Bei einem weiteren aus der DE—A 33 05 860 bekannten Anbaupflug wird angestrebt, mit Hilfe eines hinteren Stützrades, welches als schrägstehendes Furchenrad ausgebildet ist, den Gleitwiderstand der Furchenwand auf die Pflugkörper in einem sich auf den Zugkraftbedarf des Schleppers positiv auswirkenden Rollwiderstand umzusetzen. Hierbei ist die Lauffläche des Furchenrades in zwei etwa gleich große und rechtwinklig zueinander stehende Teilbereiche aufgeteilt, so daß sich dieses gegenüber der Furchensohle und auch gegenüber der Furchenwand abstützen kann. In der Praxis ist jedoch die Anlage des Furchenrades an der Furchenwand sozusagen nur als Linienberührung anzusehen. Gegenüber einer herkömmlichen Anlage an den einzelnen Pflugkörpern zur aufnahme von Querkräften des Anbaupfluges auf die Furchenwand ist die Flächenpressung bei dem Furchenrad demnach um ein vielfaches größer. Hieraus resultiert, daß bei unterschiedlicher Bodenfestigkeit die Furche beim Gepflügten nicht gerade zu halten ist und bei leichteren Böden das Furchenrad so stark in die Furchenwand eindrückt, daß diese einstürzt und hinter dem Pflug in die Furche fällt. Eine saubere Arbeit ist mit diesem Anbaupflug demnach nicht zu vollziehen.

Der Erfindung liegt die Aufgabe zugrunde, einen Anbaupflug der eingangs genannten Art hinsichtlich seiner Einstellbarkeit möglichst einfach zu gestalten und ferner den Anlagedruck und damit den Gleitwiderstand der Pflugkörper an der Furchenwand auf ein Minimum herabzusetzen, so daß der Zugkraftbedarf des Schleppers verringert wird.

Diese Aufgabe wird gemäß der Erfindung gelöst durch die im kennzeichnenden Teil des Patentanspruchs 1 angegebenen Merkmale. Erfindungsgemäß wird somit die Gesamtwiderstandskraft aller Pflugkörper am Pflugrahmen über eine Scharnierverbindung, hier insbesondere einem Zapfen einer Scharnierverbindung, auf eine Pflugkoppel übertragen. Durch eine gezielte, örtliche Anordnung der Mittelhochachse des Zapfens an der Pflugkoppel in Verbindung mit einem Scharnierteil führt sich bei vorzugsweise symmetrisch zur Mittellängsachse des Schleppers festgesetzten, jedoch höhenbeweglich angeordneten Unterlenkern, der Anbaupflug beim Pflügen selbst. Eine Zugpunkteinstellvorrichtung entfällt hierdurch. Es muß lediglich die Arbeitsbreite des vorderen Pflugkörpers eingestellt werden. Die vorgegebene örtliche Lage der Mittelhochachse des Zapfens zur Pflugkoppelmitte bestimmt ferner die Größe des Seitenzuges auf die Vorderräder des Schleppers. Absichtlich wird hier die Lage des Führungspunktes von dem durch die Unterlenker der Dreipunktaufhängung am Schlepper definierten Zugpunkt zum Gepflügten hin verlegt. Auch hierdurch wird der Gleitwiderstand der Anlagen aller Pflugkörper an der Furchenwand verringert und in Rollwiderstand auf die Vorderräder des Schleppers übertragen. Praktische Versuche ergaben nämlich, daß der Zugkraftbedarf für einen Anbaupflug abnimmt, wenn der ideelle Führungspunkt zum Gepflügten hin verlagert wird. Der Seitenzug um die Hochachse des Schleppers muß durch Gegenlenken der Vorderräder ausgeglichen werden. Messungen ergaben, daß der Zugkraftbedarf in weit stärkerem Maße abnahm, als die Rollwiderstandskräfte zunahmen. Für den Praktiker bedeutet diese Erkenntnis weniger Kraftstoffverbrauch bei gleicher Flächenleistung.

Weitere Merkmale und vorteilhafte Ausgestaltungen der Erfindung sind in den Ansprüchen 2 bis 13 angegeben. — Um eine bestimmte von Kunden bei der Bestellung eines Pfluges gewünschte Lage des Scharnierteils berücksichtigen zu können oder bei unterschiedlicher Pflugkörperzahl am Pflugrahmen ist es von Vorteil, wenn das Scharnierteil an der Pflugkoppel umsetzbar oder verschiebbar angeordnet ist. Die in den Ansprüche 4 bis 7 vorgesehenen Anschläge zur Begrenzung des Schwenkbereiches des Scharnierteils dienen zur Ruhigstellung des Pflugrahmens im ausgehobenen Zustand am Schlepper. Hier insbesondere beim Fahren des Schleppers auf dem Vorgewende des Ackers oder bei einem Anbaudrehpflug zum Drehen des Pflugrahmens mit seinen Pflugkörpern. Weitere Maßnahmen gemäß den Ansprüchen 7 bis 13 schaffen die Möglichkeit, beispielsweise einen Anbaudrehpflug nach dem Ausheben mit dem Dreipunktgestänge eines Schleppers, den Pflugrahmen von seinem Schwerpunkt her vor bzw. am Anfang seines Drehvorganges in die Lage seiner Wendewelle zu schieben. Hierdurch läßt sich der Anbaudrehpflug leichter auf dem Vorgewende drehen und benötigt eine geringere Bodenfreiheit.

Ein Ausführungsbeispiel des Gegenstandes der Erfindung wird nachstehend anhand einer Zeichnung näher erläutert; in der Zeichnung zeigt

Fig. 1 eine Draufsicht auf einen erfindungsgemäen Anbaupflug in der Ausführung eines Anbaudrehpfluges;

Fig. 2 eine Seitenansicht des Anbaudrehpfluges gemäß Fig. 1, insbesondere das Zwischenstück und die Drehvorrichtung;

Fig. 3 einen Teilbereich der Pflugkoppel mit einem Dämpfungsglied in der Draufsicht in Verbindung mit einem Schaltbild der hydraulischen Anlage des Anbaudrehpfluges.

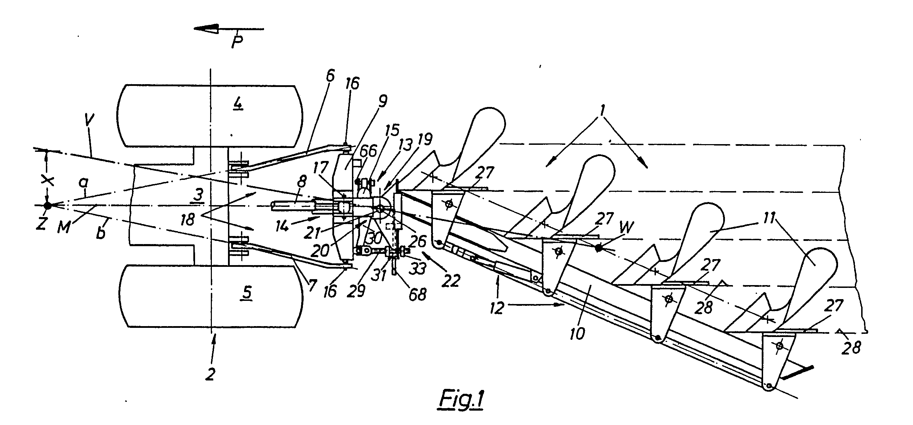

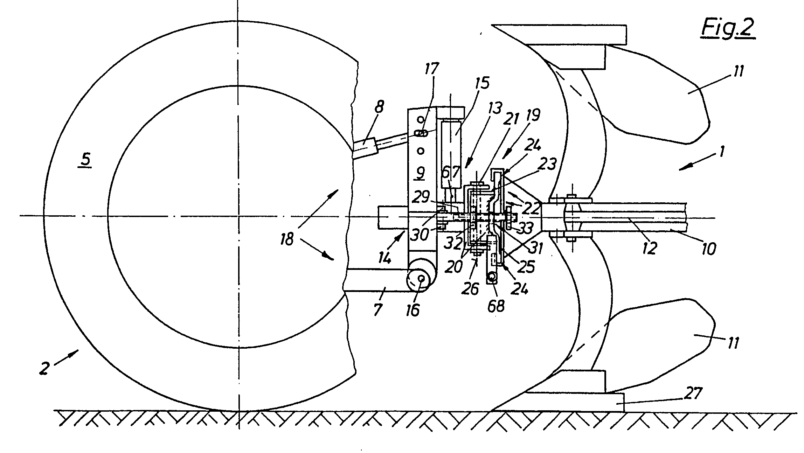

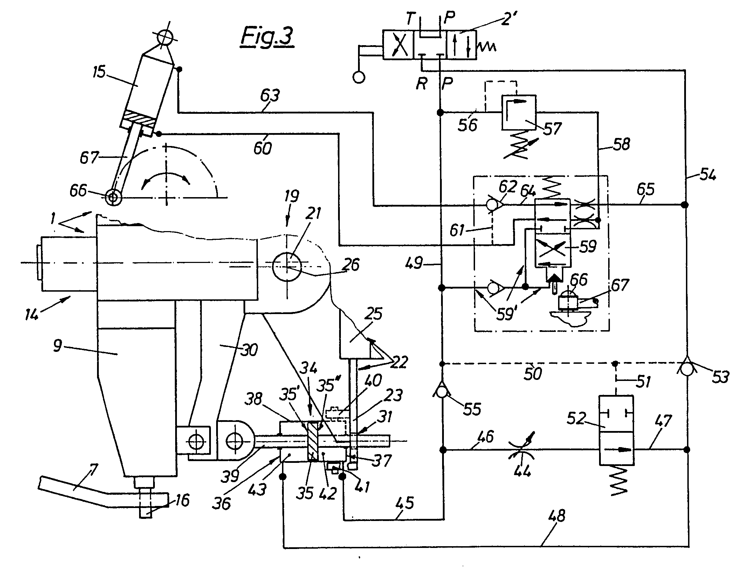

In den Zeichnungen ist ein Anbaupflug insgesamt mit 1 und ein Schlepper insgesamt mit 2 bezeichnet. Vom Schlepper 2 sind der Hinterachsteil 3, ein furchenseitig zum Gepflügten hin laufendes Hinterrad 4, ein auf dem Ungepflügten laufendes Hinterrad 5, Unterlenker 6, 7 und ein Oberlenker 8 dargestellt. Der Anbaupflug 1 hat eine Pflugkoppel 9, einen Pflugrahmen 10 mit Pflugkörpern 11 und eine Breitenverstelleinrichtung 12. Die Pflugkoppel 9 kann beispielsweise mit einer hydraulischen Drehvorrichtung 13 bestückt sein, die ein Drehlager 14 mit Zapfen und Nabe und einen Hydraulikzylinder 15 aufweist. Sie wird über bekannte Zapfen 16, Steckbolzen 17 oder über eine Schnellkuppeleinrichtung mit den Unterlenkern 6, 7 und dem Oberlenker 8 des Dreipunktgestänges 18 angekoppelt. Erfindungsgemäß erfolgt die Verbindung Zwischen der Pflugkoppel 9 und dem Pflugrahmen 10 über ein Zwischenstück 19, das aus einem Scharnierteil 20 mit Zapfen 21 und einer, dem Scharnierteil 20 nachgeordneten Verschiebeeinrichtung 22 aufgebaut ist. Die Verschiebeeinrichtung 22 selbst besteht aus einer hochkant gestellten und senkrecht zur Pflugrichtung liegenden Platte 23, die mit einem Teil des Scharnierteils 20 eine Einheit bildet und deren Ränder 24 zur Verschiebung des Pflugrahmens 10 in einer am vorderen Ende des Pflugrahmens 10 befestigten Kulisse 25 geführt sind. In Arbeitsstellung des Anbaupfluges 1 ist das Scharnierteil 20 des Zwischenstückes 19 derart angeordnet, daß der Zapfen 21, insbesondere seine Mittelhochachse 26 senkrecht zum Erdboden gerichtet ist. Der Pflugrahmen 10 mit den Pflugkörpern 11 hat in dem Scharnierteil 20 seine einzige Verbindung mit der Plufkoppel 9 bzw. mit der hydraulischen Drehvorricxhtung 13 der Pflugkoppel 9. Die gesamte Widerstandskraft aller Pflugkörper 11 am Pflugrahmen 10, die bei dem Ausführungsbeispiel gemäß Fig. 1 mit vier Pflugkörpern 11 im Angriffspunkt W angreift, kann deshalb nur über den Zapfen 21 auf die Pflugkoppel 9 übertragen werden. Der Pflugrahmen 10 kann sich deshalb über die Pflugkörper 11 im Erdboden selbst führen und eine Drehbewegung um die Mittelhochachse 26 des Zapfens 21 ausführen. Eine Zugpunkteinstellvorrichtung am Anbaupflug 1 entfällt hierdurch. Zur Verringerung des Gleitwiderstandes zwischen den Anlagen 27 der Pflugkörper 11 und der Furchenwand 28 und zur Umwandlung und Übertragung in Rollwiderstand auf die nicht in den Figuren dargestellten Vorderräder eines Schleppers 2 ist erfindungsgemäß das Scharnierteil 20 örtlich bereits bei der Herstellung des Anbaupfluges 1 so an der Pflugkoppel 9 festgelegt, daß eine nach vorne in Pflügerichtung P verlängerte Verbindungslinie V vom Angriffspunkt W der Gesamtwiderstandskraft aller Pflugkörper 11 zur Mittelhochachse 26 des Zapfens 21 den von den Unterlenkern 6, 7 des Dreipunktgestänges 18 durch die Linien a und b definierten Zugpunkt Z schneidet oder am Zugpunkt Z auf der Seite zum Gepflügten im Abstand X vorbeiläuft. Durch diese Anordnung des Scharnierteils 20 an der Pflugkoppel 9 entstehen Momente um die Hochachse des Schleppers 2, die sein Fahrverhalten beim Pflügen beeinträchtigen. Durch Gegenlenken des Schlepperfahrers erfolgt hier eine Korrektur. Damit der Anbaupflug 1 am Feldende über Dreipunktgestänge 18 des Schleppers 2 ausgehoben und beispielsweise in der Ausführungsform eines Anbaudrehpfluges gedreht werden kann, muß die freie Drehbarkeit des Pflugerahmens 10 um die Mittelhochachse 26 des Scharnierteils 20 begrenzt werden. Deshalb sind hier an der Pflugkoppel 9 bzw. an der Drehvorrichtung 13 Anschläge vorgesehen, an denen sich der Pflugrahmen 10 beim Ausheben, beim Drehvorgang oder beim Fahren auf dem Vorgewende des Feldes anlegen kann. Bei einem Anbau- oder Anbaudrehpflug kann hier beispielsweise eine Gewindespindel 29 an der Pflugkoppel 9 oder an der Drehvorrichtung 13 der Pflugkoppel 9 befestigt sein. In Fig. 1 und 2 ist eine Gewindespindel 29 an dem mitdrehenden Teil 30 der Drehvorrichtung 13 angebracht. Die Gewindespindel 29 durchdringt hierbei die Platte 23 der Verschiebeeinrichtung 22 in einer die Gewindespindel 29 mit Spiel umgreifenden Bohrung 31. Beidseitig der Bohrung 31 in der Platte 23 befindet sich auf der Gewindespindel 29 ein Anschlag 32 und 33. Vorzugsweise sind diese Anschläge 32, 33 als einstellbare Klemmuttern ausgebildet. Der Abstand der Anschläge 32, 33 von der Platte 23 wird so vorgewählt, daß beim Pflügen die Anschläge 32, 33 die Platte 23 nicht berühren. Bei einer weiteren Ausführungsform eines Anbaudrehpfluges, wie er in Fig. 3 nur als Teilstück dargestellt ist, wird vorzugsweise bei großen, mehrscharigen Anbaupflügen 1 anstelle der vorstehend genannten Gewindespindel 29 eine Kolben-Zylinder-Anordnung 34 als Dämpfungsglied eingebaut. Die Kolben-Zylinder-Anordnung 34 weist hierbei einen Kolben 36 auf, der auf einer die beiden Böden 36, 37 des Zylinders 38 durchdringenden und in diesen mit Dichtelementen geführten Kolbenstange 39 etwa auf deren Mitte befestigt ist. Die Kolbenstange 39 ist an einem Ende an dem mitdrehenden Teil 30 der Drehvorrichtung 13 befestigt und durchdringt mit ihrem anderen Ende die Platte 23 in einer vergrößerten Bohrung 31. Der Zylinder 38 ist insgesamt in Laschen 40, 42 an der Platte 23 der Verschiebeeinrichtung 22 beweglich aufgehängt. Die Längenabmessung des Zylinders 38 ist so gewählt, daß sich der Kolben 35, der an beiden Seiten eine gleich große Ringfläche 35', 35'' hat, beim Ausheben des Pflugrahmens 10 über das Dreipunktgestänge 18 an den Böden 36, 37 des Zylinders 38, nachdem das Druckmittel von der Kammer 42 in die Kammer 43 des Zylinders 38 oder umgekehrt gedrückt wurde, anlegen, so daß die Böden 36, 37 einen Anschlag bilden. Über ein einstellbares Drosselventil 44 in dem Leitungssystem 45 bis 48 zum Umsetzen des Druckmittels von der Kammer 43 in die Kammer 44 oder umgekehrt, läßt sich die Dämpfung der Kolben-Zylinder-Anordnung 34 noch verändern. Ein schlagartiges Versetzen des Pflugrahmens 10 im ausgehobenen Zustand läßt sich hierdurch vermeiden.

Zur Verschiebung des Schwerpunktes des Pflugrahmens 10 vor oder während des Drehvorganges des Pflugrahmens 10 in seine ideelle Drehachse kann die Kolben-Zylinder-Anordnung mit dem Hydraulikkreis des Schleppers 2 sowie mit dem Hydraulikschaltkreis der Drehvorrichtung 13 durch eine Vorrangschaltung verbunden werden. Nach dem Ausheben des Pflugrahmens 10 mit dem Dreipunktgestänge 18 des Schleppers 2 wird vom Schlepperfahrer zunächst über ein allgemein am Schlepper 2 befindliches 4/3 Wegeventil 2' die Leitung 49 mit Druckmittel beaufschlagt, wodurch gleichzeitig die Steuerleitungen 50, 51 mit Druckmittel beaufschlagt werden. Das Ventil 52 schaltet um und schließt die Verbindung der Leitungen 46, 47. Ebenfalls wird ein Rückschlagventil 53 entsperrt, so daß Druckmittel aus der Kammer 43 des Zylinders 38 frei über die Leitung 48, 54 zum Rücklauf R bzw. zum Tank der Schlepperhydraulik fließen kann. Durch das Rückschlagventil 55 gelangt aus der Leitung 49 das Druckmittel über die Leitung 45 in die Kammer 42 des Zylinders 38. Der Kolben 35 bewegt die Kolbestange 39 und schwenkt den Pflugrahmen 10 um die Mittelhochachse 26 des Zapfens 21, bis sich der Kolben mit seiner Ringfläche 35' an den Boden 36 anlegt. Die Folge hiervon ist, daß der Druck in der Leitung 49 ansteigt und ca. bei 75 bar über eine Leitung 56 ein einstellbares Überdruckventil 57 öffnet, welches Druckmittel über die Leitung 58 einem mechanisch betätigten 4/2 Wegeventil 59 zuführt. Über einer weitere Leitung 60 wird mit dem Druckmittel der Hydraulikzylinder 15 der Drehvorrichtung 13 eingefahren, wobei über eine Steuerleitung 61 ein Rückschlagventil 62 zur Freigabe der Leitungen 63, 64 entsperrt wird. Durch das Wegeventil 59 und die Leitungen 65, 54 kann das im Hydraulikzylinder 15 befindliche Druckmittel frei zum Rücklauf fließen. Der Pflugrahmen 10 dreht zunächst um 90° und wird dann durch mechanische Umschaltung des Wegeventils 59 von dem Befestigungsbolzen 66 der Kolbenstange 67 des Hydraulikzylinders 15 um weitere 90° gedreht. Der Hydraulikzylinder 15 fährt hierbei wieder aus, indem er über das Wegeventil 59 mit den Leitungen 63, 64 eine Druckmittelzufuhr über die Leitung 58 erhält. Das sich kolbenseitig im Zylinderraum befindliche Druckmittel kann über die Leitungen 60, 65, 54 frei zum Rücklauf fließen. Nach Beendigung des Drehvorganges schaltet der Schlepperfahrer das 4/3 Wegeventil 2' wieder um, so daß kurzzeitig die Leitung P mit der Leitung T zum Tank verbunden wird. Die Schalthilfe 59' des 4/2 Wegeventils 59 wird hierdurch aufgehoben, so daß dieses umschaltet. Der Schlepperfahrer schaltet nun das 4/3 Wegeventil 2' in die neutrale Stellung, so daß das System der hydraulischen Drehvorrichtung 13 bis auf die Leitung 63 drucklos wird.

Inzwischen haben des Überdruckventil 57, das Ventil 52 und das Rückschlagventil 53 ebenfalls umgeschalet und ihre Ausgangsposition wieder eingenommen.

Die Kolben-Zylinder-Anordnung 34 wird auch drucklos, so daß der Kolben 36 sich in dem Zylinder 38 mit Hilfe der Leitungen 45, 46, 47, 48 gedämpft hin- und herbewegen kann. Die Pflugkörper 11 am Pflugrahmen 10 können wieder in den Erdboden eingesetzt werden.

Der Erfindungsgemäße Anbaupflug muß lediglich dann eingestellt werden, wenn die Arbeitsbreite geändert werden soll. Diese erfolgt durch Verschiebung der Kulisse 25 zusammen mit dem Pflugrahmen 10 auf der Platte 23 des Zwischenstückes 19 mit Hilfe einer Verstellspindel 68. Ferner können auch bei dem in Fig. 1 gezeigten Ausführungsbeispiel alle Pflugkörper über eine Breitenverstelleinrichtung 12 zentral vom Schlepper 2 mit der Schlepperhydraulik verstellt werden.

Die in dem Ausführungsbeispiel dargestellte Verschiebeeinrichtung 22 zur Einstellung der Arbeitsbreite des ersten Pflugkörpers kann auch durch eine Verstelleinrichtung mittels eines bekannten Lenkerparallelogramms in Verbindung mit einem Diagonallenker erfolgen. Das Lenkerparallelogram kann dann ein Teil des Zwischenstückes 19 sein.

Zu der Größe des Abstandes X von dem Zugpunkt Z zum Gepflügten hin ist noch auszuführen, daß der Abstand X je nach Ausführung und Größe des Anbaupfluges 1 werksseitig ermittelt wird, wobei der Faktor des Gegenlenkens zur Umsetzung des Gleitwiderstandes von den Anlagen 27 der Pflugkörper 11 in Rollwiderstand auf den Schlepper 2 im zumutbaren Bereich des Schlepperfahrers liegen muß. Versuche ergaben, daß mit Zunahme des Abstandes X vom Zugpunkt Z der Schlupf an den Antriebsrädern des Schleppers geringer wird. Die Folge hiervon ist, daß dementsprechend auch der Kraftstoffverbrauch des Schleppers 2 bei Vergrößerung des Abstandes X weiter abnimmt.

Damit bei unterschiedlichem Anbaupflugtyp oder auf Wunsch des Kunden vor der Auslieferung vom Hersteller oder vom Händler die Lage der Mittelhochachse 26 des Zapfens 21 noch verändert werden kann, ist es von Vorteil, wenn das Scharnierteil 20 noch durch nicht dargestellte Steckbolzen oder durch ein festsetzbares Schiebeteil an der Pflugkoppel befestigt ist.

## Patentansprüche

1. Anbaupflug (1) mit einer Pflugkoppel (9), die über Anschlußpunkte (16, 17) an Oberlenker (8) und an Unterlenker (6, 7) eines Gestänges (18) eines Schleppers (2) anbaubar ist, mit einem Pflugrahmen (10) mit Pflugkörpern (11), der über ein Zwischenstück (19), bestehend aus einem Scharnierteil (20) und einem Zapfen (21), der in der Arbeitsstellung des Pfluges senkrecht zum Boden gerichtet ist, und einer Verschiebeeinrichtung (22) zur Querverschiebung des Pflugrahmens (10) zum Gepflügten hin oder von diesem fort mit der Pflugkoppel (9) verbunden ist, wobei der Pflugrahmen (10) die Gesamtwiderstandskraft aller seiner Pflugkörper (11) über den Zapfen (21) des Scharnierteils (20) auf die Pflugkoppel (9) überträgt, und wobei das Zwischenstück (19) mit dem Scharnierteil (20) und dem Zapfen (21) derart an der Pflugkoppel (9) angeordnet ist, daß eine nach vorne verlängerte Verbindungslinie (V) vom gedachten Angriffspunkt (W) der Gesamtwiderstandskraft aller Pflugkörper (11) am Pflugrahmen (10) zur Mittelhochachse (26) des Zapfens (21) an dem von den Unterlenkern (6, 7) des Gestänges (18) des Schleppers (2) definierbaren Zugpunkt (Z) auf der Seite des Gepflügten in einem bestimmten seitlichen Abstand (X) vorbeilegbar ist, dadurch gekennzeichnet, daß der Pflug an einem als Dreipunktgestänge ausgebildeten Gestänge (18) des Schleppers anbaubar ist, dessen Unterlenker (6, 7) im Pflugbetrieb gegen Seitenbewegungen arretiert sind und einen feststehenden ideellen Zugpunkt (Z) definieren, an dem die Verbindungslinie auf der Seite des Gepflügten in dem bestimmten Abstand (X) vorbeiläuft, daß die Verschiebeein richtung (22) zur Querverschiebung des Pflugrahmens (10) dem Scharnierteil (20) nachgeordnet ist und daß der Pflugrahmen (10) im Pflugbetrieb um die Mittelhochachse (26) des Zapfens (21) des Scharnierteils (20) zwischen Anschlägen (32, 33) frei pendelbar ist, die in Pflügerichtung (P) seitlich rechts und/oder links vom Scharnierteil an der Pflugkoppel und bei einer Pflugausführung als Anbaudrehpflug an einem sich beim Drehvorgang mitdrehenden Teil (30) der Pflugkoppel angeordnet sind.

2. Anbaupflug nach Anspruch 1, dadurch gekennzeichnet, daß das Scharnierteil (20) bzw. die Mittelhochachse (26) des Zapfens (21) an der Pflugkoppel (9) in Abhängigkeit von der Anzahl der Pflugkörper (11) in einem Bereich nahe der parallel zur Pflügerichtung (P) liegenden Mittellinie (M) des Schleppers (2) vorgesehen ist.

3. Anbaupflug nach Anspruch 1 oder 2, dadurch gekennzeichnet, daß das Scharnierteil (20) an der Pflugkoppel (9) quer zur Pflügerichtung (P) umsetzbar oder verschiebbar ist.

4. Anbaupflug nach einem der Ansprüche 1 bis 3, dadurch gekennzeichnet, daß die Anschläge (32, 33) zur Bregenzung der freien Drehbarkeit des Zapfens (21) im Scharnierteil (20) um die Mittelhochachse ein- und feststellbar sind.

5. Anbaupflug nach Anspruch 4, dadurch gekennzeichnet, daß sich die einstell- und feststellbaren Anschläge (32, 33) auf einer an der Pflugkoppel (9) befestigten Gewindespindel (29) befinden, zwischen denen ein Teil des Zwischenstücks (19) für eine begrenzte Schwenkbarkeit des Pflugrahmens (10) um die Mittelhochachse (26) des Zapfens (21) frei bewegbar ist.

6. Anbaupflug nach einem der Ansprüche 1 bis 5, dadurch gekennzeichnet, daß ein eine Kolben-Zylinder-Anordnung (34) umfassendes Dämpfungsglied eingebaut ist.

7. Anbaupflug nach Anspruch 6, dadurch gekennzeichnet, daß der Kolben-Zylinder-Anordnung (34) auf einer in Böden (36, 37) des Zylinders (38) geführten Kolbenstange (39) in etwa mittig auf dieser befestigt ist und beidseits eine in etwa übereinstimmende Ringfläche (35', 35'') aufweist.

8. Anbaupflug nach einem der Ansprüche 6 oder 7, dadurch gekennzeichnet, daß die Kolben-Zylinder-Anordnung (34) mit dem Hydraulikkreislauf des Schleppers (2) über Hydraulikleitungen verbunden ist.

9. Anbaupflug nach einem der Ansprüche 6 bis 8, dadurch gekennzeichnet, daß bei einer Pflugausführung als Anbaudrehpflug die Kolben-Zylinder-Anordnung (34) mit einer hydraulischen Drehvorrichtung (13) schaltungsmäßig zusammenlegbar ist.

10. Anbaupflug nach Anspruch 9, dadurch gekennzeichnet, daß die Verbindung mit der hydraulischen Drehvorrichtung (13) in Form einer Vorrangschaltung für die Kolben-Zylinder-Anordnung erfolgt.

11. Anbaupflug nach einem der Ansprüche 8 bis 10, dadurch gekennzeichnet, daß die Kolben-Zylinder-Anordnung (34) gleichzeitig für die Schwerpunktverschiebung des Pflugrahmens (10) in dem Bereich seiner ideellen Drehachse beim Drehvorgang verwendbar ist.

**Revendications**

1. Charrue portée (1) comprenant une barre de charrue (9) qui est montable sur le bras articulé supérieur (8), par l'intermédiaire de points de raccordement (16, 17), et sur les bras articulés inférieurs (6, 7) d'une tringlerie (18) d'un tracteur (2), avec un cadre de charrue (10), comportant des corps de charrue (11) et relié, par l'intermédiaire d'une pièce intermédiaire (19) se composant d'une partie de charnière (20) et d'un tourillon (21), qui est orienté perpendiculairement au sol lorsque la charrue est en position de travail, et à l'accouplement de charrue (9), par l'intermédiaire d'un dispositif de déplacement (22) servant au déplacement transversal du cadre de charrue (10) vers le labour ou hors du labour, le cadre de charrue (10) transmettant la totalité de la force de résistance de tous ses corps de charrue (11), par l'intermédiaire du tourillon (21) de la partie de charnière (20), à l'accouplement de charrue (9), la pièce intermédiaire (19) avec la partie de charnière (20) et le tourillon (21) étant disposés sur l'accouplement de charrue (9) de telle façon qu'une droite de liaison (V) prolongée vers l'avant, partant du point d'attaque (W) supposé de la totalité de la force de résistance de tous les corps de charrue (11) sur le cadre de charrue (10) et allant vers l'axe de giration central (26) du tourillon (21), passe à une distance (X) du centre de traction (Z) défini par les bras articulés inférieurs (6, 7) de la tringlerie à trois points (18) du tracteur (2) et situé du côté du labour, caractérisée en ce que la charrue est montable sur une tringlerie (18) du tracteur qui est réalisée sous la forme d'un tringlerie à trois points, dont, lors du fonctionnement de la charrue, les bras articulés inférieurs (6, 7) sont bloqués contre tout déplacement latéral et définissent un centre de traction imaginaire (Z) fixe, centre auquel la droite de liaison passe à une distance déterminée, du côté du labour, en ce que le dispositif de déplacement (22) servant au déplacement transversal du cadre de charrue (10) est placé en aval de la partie de charnière (20) et peut osciller librement autour de l'axe de giration central du tourillon (21) de la partie de charnière (20), entre deux butées (32, 33) qui sont disposées, dans le sens de labour (P), latéralement à droite et/ou à gauche de la partie de charnière, sur l'accouplement de charrue, et qui sont disposées sur une partie (30) de l'accouplement de charrue qui tourne conjointement, lors du processus de rotation, dans le cas d'une réalisation de la charrue en charrue portée.

2. Charrue portée selon la revendication 1, caractérisée en ce que la partie de charnière (20) ou l'axe de giration central (26) du tourillon (21) sur l'accouplement de charrue (9) est prévu, en fonction du nombre de corps de charrue (11), dans une zone proche de l'axe (M) du tracteur (2), qui est parallèle à la direction du labour (P).

3. Charrue portée selon la revendication 1 ou 2, caractérisée en ce que la partie de charnière (20) est mobile ou déplaçable sur l'accouplement de charrue (9), transversalement à la direction du labour (P).

4. Charrue portée selon l'une des revendications 1 à 3, caractérisée en ce que les butées (32, 33) servant à la limitation de la rotation libre du tourillon (21) dans la partie de charnière (20) sont susceptibles d'être réglables et bloquées sur l'axe de giration central.

5. Charrue portée selon la revendication 4, caractérisée en ce que les butées (32, 33) susceptibles d'être réglables et bloquées se trouvant sur une broche filetée (29) fixée à l'accouplement de charrue (9), butées entre lesquelles une partie de la pièce intermédiaire (19) est librement déplaçable, pour permettre un pivotement limité du cadre de charrue (10) sur l'axe de giration central (26) du tourillon.

6. Charrue portée selon l'une des revendications 1 à 5, caractérisée en ce qu'un organe d'amortissement, comprenant un dispositif à piston et cylindre (34), est intégré.

7. Charrue portée selon la revendication 6, caractérisée en ce que le piston (35) du dispositif à piston et cylindre (34) est fixé sur une tige de piston (39) guidée dans des fonds (36, 37) du cylindre (38), à peu près au milieu de la tige (39), et présente des deux côtés une face annulaire (35', 35'') placée à peu près en coïncidence.

8. Charrue portée selon l'une des revendications 6 ou 7, caractérisée en ce que le dispositif à piston et cylindre (34) est relié par des conduites hydrauliques au circuit hydraulique du tracteur (2).

9. Charrue portée selon des revendications 6 à 8, caractérisée en ce que dans le cas d'une charrue réalisée en charrue portée, le circuit du dispositif à piston et cylindre (34) peut être combiné avec un dispositif de rotation hydraulique (13).

10. Charrue portée selon la revendication 9, caractérisée en ce que la liaison avec le circuit de rotation hydraulique (13) s'effectue sous la forme d'un circuit prioritaire pour le dispositif à piston et cylindre.

11. Charrue portée selon l'une des revendications 8 à 10, caractérisée en ce que le dispositif à piston et cylindre (34) est utilisable simultanément lors du processus de rotation pour le déplacement du centre de gravité du cadre de charrue (10) dans la zone de son axe de rotation imaginaire.

**Claims**

1. A mounted plough (1) having a plough coupler (9) which can be mounted, via connecting points (16, 17), on upper links (8) and on lower links (6, 7) of a linkage (18) of a tractor (2), having a plough frame (10) with ploughing members (11), which is connected to the plough coupler (9) via an intermediate member (19) consisting of a hinge portion (20) and a pin (21), which, in the working position of the plough, is directed perpendicular to the ground, and of a displacement device (22) for the transverse displacement of the plough frame (10) towards or away from the ploughed area, wherein the plough frame (10) transmits the total resistance of all its ploughing members (11) via the pin (21) of the hinge portion (20) to the plough coupler (9), and wherein the intermediate member (19) is disposed with the hinge portion (20) and the pin (21) on the plough coupler (9) in such a manner that a connecting line (V), from the imaginary point of action (W) of the total resistance of all the ploughing members (11) on the plough frame (10) to the central vertical axis (26) of the pin (21), which connecting line is extended forwards, can be laid past the towing point (Z), which can be defined by the lower links (6, 7) of the linkage (18) of the tractor (2), at the side of the ploughed area, with a certain lateral spacing (X), characterised in that the plough can be mounted on a linkage (18) of the tractor, which linkage is constructed in the form of a three-point linkage of which the lower links (6, 7), in ploughing operation, are locked against lateral movements and define a fixed ideal towing point (Z) past which the connecting line runs at the side of the ploughed area at the specific distance (X), in that the displacement device (22) for the transverse displacement of the plough frame (10) is disposed behind the hinge portion (20), and in that, in ploughing operation, the plough frame (10) can swing freely about the central vertical axis (26) of the pin (21) of the hinge portion (20), between stops (32, 33) which are disposed laterally to the right and/or to the left of the hinge portion in the ploughing direction (P), on the plough coupler and, if the plough is constructed in the form of a mounted turn-over plough, on a part (30) of the plough coupler which participates in the rotation during the turn-over operation.

2. A mounted plough according to claim 1, characterised in that the hinge portion (20) or the central vertical axis (26) of the pin (21) is provided on the plough coupler (9) depending on the number of ploughing members (11), in a region close to the centre line (M) of the tractor (2), which centre line lies parallel to the ploughing direction (P).

3. A mounted plough according to claim 1 or 2, characterised in that the hinge portion (20) is transferable or displaceable on the plough coupler (9), transversely to the ploughing direction (P).

4. A mounted plough according to any one of claims 1 to 3, characterised in that the stops (32, 33) to limit the free rotatability of the pin (21) in the hinge position (20) about the central vertical axis can be adjusted and locked.

5. A mounted plough according to claim 4, characterised in that the stops (32, 33) which can be adjusted and locked are on a threaded spindle (29) secured to the plough coupler (9), between which a portion of the intermediate member (19) is freely movable for a limited pivotability of the plough frame (10) about the central vertical axis (26) of the pin (21).

6. A mounted plough according to any one of claims 1 to 5, characterised in that a damping element comprising a piston-cylinder arrangement (34) is installed.

7. A mounted plough according to claim 6, characterised in that the piston (35) of the piston-cylinder arrangement (34) is secured substantially centrally to a piston rod (39) guided in ends (36, 37) of the cylinder (38), and has substantially coinciding annular faces (35', 35'') at both sides.

8. A mounted plough according to any one of claims 6 or 7, characterised in that the piston-cylinder arrangement (34) is connected to the hydraulic circuit of the tractor (2) via hydraulic pipelines.

9. A mounted plough according to any one of claims 6 to 8, characterised in that, in the case of a plough constructed in the form of a mounted turn-over plough, the piston-cylinder arrangement (34) can be combined with a hydraulic turn-over device (13) with regard to the circuit.

10. A mounted plough according to claim 9, characterised in that the connection to the hydraulic turn-over device (13) is effected in the form of a priority circuit for the piston-cylinder arrangement.

11. A mounted plough according to any one of claims 8 to 10, characterised in that the piston-cylinder arrangement (34) can be used simultaneously for the displacement of the centre of gravity of the plough frame (10) in the region of its ideal axis of rotation during the turn-over operation.

_Fig.1_

1

EP 0 198 405 B1

Fig.2

2

Fig.3

3